# EUROPÄISCHE PATENTANMELDUNG

(11) **EP 1 216 763 A2**
(43) Veröffentlichungstag der Anmeldung: **26.06.2002**
(21) Anmeldenummer: 01130456.5
(22) Anmeldetag: 20.12.2001
(51) Int. Cl.: B09B 1/00, B09C 1/10

(54) **Verfahren zur Behandlung von Mülldeponien durch Eintrag einer mit Sauerstoff angereicherten Flüssigkeit**

(30) Priorität: 21.12.2000 DE 10064013
(71) Anmelder: Linde Aktiengesellschaft, 65189 Wiesbaden (DE)
(72) Erfinder: Bürkli, Markus, 6006 Luzern (CH); Ziemann, Georg, 6048 Horw (CH)
(74) Vertreter: Gellner, Bernd, Dr.

(57) **Zusammenfassung**

Die Erfindung betrifft ein Verfahren zur Behandlung von Mülldeponien durch Eintrag von Sauerstoff, das dadurch gekennzeichnet ist, dass der Sauerstoff in einer Flüssigkeit angereichert ist, die über in der Mülldeponie vorhandene Ver- und/oder Entsorgungseinrichtungen in die Mülldeponie eingetragen wird. Bevorzugt wird technisch reiner Sauerstoff zur Anreicherung der Flüssigkeit bis zur Sättigungsgrenze verwendet.

Als für den Gaseintrag geeignete bereits vorhandene Einrichtungen in Mülldeponien sind bevorzugt Einrichtungen zur Sickerwasserkreislaufführung oder zur Deponiebe- und/oder entwässerung zu sehen. Durch die Nutzung vorhandener Einrichtungen können die Kosten für die Nachsorge einer Mülldeponie vorteilhaft gesenkt werden.

## Beschreibung

Die Erfindung betrifft ein Verfahren zur Behandlung von Mülldeponien durch Eintrag von Sauerstoff.

Mülldeponien, insbesondere Hausmülldeponien, welche üblicherweise abgedeckt und geschlossen sind, müssen nachgesorgt werden, damit die Abgabe chemischer Produkte, die sich im Sickerwasser und in der Abluft wiederfinden, kontrolliert werden kann und dabei auftretende Schadstoffe vernichtet werden können. Diese Nachsorge muss meist über einen sehr langen Zeitraum betrieben werden und ist sehr kostenintensiv.

Nach dem Stand der Technik wird das Sickerwasser gefasst und je nach Belastung mittels biologischer, physikalischer oder chemischer Verfahren oder deren Kombinationen behandelt. Die entstehenden Gase werden abgesaugt und verbrannt oder über einen Biofilter geleitet.

Für den Fall, dass eine Deponie umgelagert werden muss, wird gelegentlich das sog. Biopusterverfahren gemäß der EP 0 489 705 B1 vorgeschlagen, bei dem von oben mittels Lanzen Sauerstoff oder sauerstoffangereicherte Luft intermittierend unter hohem Druck schlagartig in die Deponie eingetragen wird, um die oberste Schicht aerob umzustellen, damit ein geruchsminimierter Abbau möglich wird.

Es ist außerdem bekannt, Deponien in-situ mit Luft oder Sauerstoff zu begasen, wobei jedoch eine Bodenabsaugung über Bohrungen und/oder Schächte für eine Durchlüftung der Deponie sorgen muss.

Des Weiteren ist für Hügel-Deponien gemäß der DE 199 59 635 A1 bekannt sauerstoffhaltiges Gas mittels einer Vielzahl von zu diesem Zweck am Fuß der Mülldeponie angebrachten Lanzen in die Mülldeponie einzutragen.

Die bisherigen Verfahren zur Nachsorge von Mülldeponien sind meist technisch sehr aufwendig und erfordern hohe Investitionskosten. Beispielsweise macht eine Absaugung von Gasen teure Bohrungen notwendig. Ein Abtragen der Deponie ist nur mit aufwendiger Technik möglich. Darüber hinaus sind für eine Umlagerung der Mülldeponie andere Ablageplätze erforderlich. Auch der Einsatz einer Vielzahl von Sauerstofflanzen ist mit Kosten verbunden.

Der vorliegenden Erfindung liegt die Aufgabe zugrunde, ein Verfahren zur Behandlung von Mülldeponien zur Verfügung zu stellen, das eine erhebliche Verkürzung der Nachsorgezeit ohne Umlagerung der Deponie und auf kostengünstige Weise ermöglicht.

Diese Aufgabe wird erfindungsgemäß dadurch gelöst, dass der Sauerstoff in einer Flüssigkeit angereichert ist, die über in der Mülldeponie vorhandene Ver- und/oder Entsorgungseinrichtungen in die Mülldeponie eingetragen wird.

Ziel der Erfindung ist eine Unterstützung der biologischen Abbauvorgänge in der Mülldeponie. Während der Errichtung der Mülldeponie beginnt zunächst ein kurzzeitiger aerober Abbau, anschließend läuft in den abgedeckten, unteren Schichten der Mülldeponie ein anaerober Abbau ab, der im wesentlichen Methan produziert, was viele Deponien zur Energieerzeugung nutzen. Danach bleiben aber noch Schadstoffreste übrig, die biologisch anaerob nicht abgebaut werden können. Hier müsste noch einmal eine aerobe Phase anschließen, die aber bisher nicht in einer Deponie aufgebaut werden konnte. Mit der vorliegenden Erfindung wird nun diese dritte Phase, die aerobe Phase, durch Einbringen von Sauerstoff unterstützt.

Es ist davon auszugehen, dass schadstoffabbauende Mikroorganismen in der Mülldeponie vorhanden sind, die bisher mangels Sauerstoff nur nicht aktiv werden konnten. Durch den erfindungsgemäßen Eintrag von Sauerstoff über eine mit Sauerstoff angereicherten Flüssigkeit, wird eine Versorgung dieser Mikroorganismen mit Sauerstoff erreicht, da zumindest ein Teil des Sauerstoffs, der nur zum Teil in der Flüssigkeit gelöst ist, mit der Zeit aus der Flüssigkeit ausgast. Die Flüssigkeit dient lediglich als Trägermedium, durch das der Sauerstoff in das Innere der Mülldeponie gelangt.

Wesentlich ist dabei, dass keine separaten Einrichtungen zum Eintrag der mit Sauerstoff angereicherten Flüssigkeit errichtet werden müssen und keine aufwendigen Bohrungen und Schächte nötig sind, sowie auf eine Vielzahl von Sauerstofflanzen verzichtet werden kann. Die sauerstoffhaltige Flüssigkeit wird erfindungsgemäß über in der Mülldeponie bereits vorhandene Ver- und/oder Entsorgungseinrichtungen dem Deponiekörper zugeführt.

Im Gegensatz zum Stand der Technik wird beim erfindungsgemäßen Verfahren vorteilhaft auf in jedem Fall in einer Mülldeponie vorhandene Einrichtungen zurückgegriffen. Dadurch werden die Kosten für das Verfahren gering gehalten.

Als sauerstoffhaltiges Gas wird bevorzugt technisch reiner Sauerstoff verwendet. Bei Einsatz von technisch reinem Sauerstoff kann mit einem sehr schnellen Abbau der Schadstoffe bei vergleichsweise geringen Kosten für den Sauerstoff gerechnet werden.

Besonders bevorzugt wird die Flüssigkeit bis zur Sättigungsgrenze mit Sauerstoff angereichert. Dadurch wird eine gute Versorgung der Mülldeponie mit Sauerstoff erreicht. In verschiedenen Fällen kann es von besonderem Vorteil sein, die Flüssigkeit bei der Anreicherung mit Sauerstoff mit einem deutlichem Überschuss an Sauerstoff zu versorgen. Dadurch steht am Anfang des Eintrags in die Mülldeponie besonders viel Sauerstoff zur Verfügung.

Eine vorteilhafte Ausgestaltung der Erfindung besteht darin, das Deponiesickerwasser mit Sauerstoff anzureichem. Mit besonderem Vorteil wird mit Sauerstoff angereichertes Deponiesickerwasser über in der Mülldeponie vorhandene Einrichtungen zur Beund/oder Entwässerung in die Mülldeponie eingetragen.

Gemäß einer besonders bevorzugten Ausführungsform der Erfindung wird das mit Sauerstoff angereicherte Deponiesickerwasser über in der Mülldeponie vorhandene Einrichtungen zur Sickerwasserkreislaufführung durch die Mülldeponie geleitet. Diese Ausführungsform gewährleistet eine sehr gleichmäßige Verteilung des Sauerstoffs in der Mülldeponie.

Bevorzugt wird die mit Sauerstoff angereicherte Flüssigkeit der Mülldeponie kontinuierlich zugeführt. Durch die kontinuierliche Zufuhr kann ein ununterbrochener Schadstoffabbau über längere Zeit gewährleistet werden.

Gemäß einer vorteilhaften Weiterbildung der Erfindung werden der Mülldeponie zusätzlich Nährstoffe für schadstoffabbauende Mikroorganismen zugeführt. Gemäß einer besonders vorteilhaften Weiterbildung der Erfindung werden der Mülldeponie zusätzlich an die abzubauenden Schadstoffe angepasste Mikroorganismen zugeführt. Dadurch kann eine weitere Steigerung des Schadstoffabbaus erreicht werden.

Die Erfindung bietet den Vorteil, dass eine gleichmäßige Verteilung des zugeführten Sauerstoffes in der Mülldeponie unabhängig von der Form der Mülldeponie möglich ist. Beispielsweise eignet sich die Erfindung hervorragend für Mülldeponien in Gruben und Senken oder in V-Tälern, da diese über die vorhandenen Einrichtung zur Ver- und/oder Entsorgung der Mülldeponie sehr gut mit der mit Sauerstoff angereicherten Flüssigkeit versorgt werden können, aus der zumindest ein Teil des Sauerstoff mit der Zeit ausgast. Unter den vorhandenen Einrichtung zur Ver- und/oder Entsorgung sind in erster Linie Einrichtungen für den Umgang mit dem in der Deponie auftretenden Sickerwasser zu verstehen. Die vorhandenen Leitungssysteme und Fassungen sind in der Regel weiträumig angelegt, wodurch eine weitreichende Verteilung des Sauerstoffs erreichbar ist.

Durch die Nutzung vorhandener Einrichtungen können die Kosten für die Nachsorge einer Mülldeponie vorteilhaft gesenkt werden. Das erfindungsgemäße Verfahren verursacht keine oder nur geringe Investitionskosten.

## Patentansprüche

1. Verfahren zur Behandlung von Mülldeponien durch Eintrag von Sauerstoff, **dadurch gekennzeichnet, dass** der Sauerstoff in einer Flüssigkeit angereichert ist, die über in der Mülldeponie vorhandene Ver- und/oder Entsorgungseinrichtungen in die Mülldeponie eingetragen wird.

2. Verfahren nach Anspruch 1, **dadurch gekennzeichnet, dass** technisch reiner Sauerstoff zur Anreicherung der Flüssigkeit verwendet wird.

3. Verfahren nach Anspruch 1 oder 2, **dadurch gekennzeichnet, dass** die Flüssigkeit bis zur Sättigungsgrenze mit Sauerstoff angereichert wird.

4. Verfahren nach einem der Ansprüche 1 bis 3, **dadurch gekennzeichnet, dass** Deponiesickerwasser mit Sauerstoff angereichert wird.

5. Verfahren nach einem der Ansprüche 1 bis 4, **dadurch gekennzeichnet, dass** mit Sauerstoff angereichertes Deponiesickerwasser über in der Mülldeponie vorhandene Einrichtungen zur Be- und/oder Entwässerung in die Mülldeponie eingetragen wird.

6. Verfahren nach einem der Ansprüche 1 bis 5, **dadurch gekennzeichnet, dass** das mit Sauerstoff angereicherte Deponiesickerwasser über in der Mülldeponie vorhandene Einrichtungen zur Sickerwasserkreislaufführung durch die Mülldeponie geleitet wird.

7. Verfahren nach einem der Ansprüche 1 bis 6, **dadurch gekennzeichnet, dass** die mit Sauerstoff angereicherte Flüssigkeit der Mülldeponie kontinuierlich zugeführt wird.

8. Verfahren nach einem der Ansprüche 1 bis 7, **dadurch gekennzeichnet, dass** der Mülldeponie zusätzlich Nährstoffe für schadstoffabbauende Mikroorganismen zugeführt werden.

9. Verfahren nach einem der Ansprüche 1 bis 8, **dadurch gekennzeichnet, dass** der Mülldeponie zusätzlich an die abzubauenden Schadstoffe angepasste Mikroorganismen zugeführt werden.
